# EUROPÄISCHE PATENTSCHRIFT

(11) **EP 2 087 317 B1**
(45) Veröffentlichungstag und Bekanntmachung des Hinweises auf die Patenterteilung: **12.05.2010**
(21) Anmeldenummer: 07803235.6
(22) Anmeldetag: 05.09.2007
(51) Int. Cl.: G01C 21/36

(54) **VERFAHREN ZUR AUSWAHL EINES FAHRZIELS**
METHOD FOR SELECTING A DESTINATION
PROCÉDÉ POUR LE CHOIX D'UNE DESTINATION

(30) Priorität: 31.10.2006 DE 102006051331
(43) Veröffentlichungstag der Anmeldung: 12.08.2009
(73) Patentinhaber: Robert Bosch GmbH, 70442 Stuttgart (DE)
(72) Erfinder: AUBERG, Stefan, 70825 Korntal-Muenchingen (DE); JUNGK, Andreas, 73733 Esslingen (DE)
(86) Internationale Anmeldenummer: PCT/EP2007/059271
(87) Internationale Veröffentlichungsnummer: WO 2008/052823

(56) Entgegenhaltungen:
- EP-A- 1 376 063
- WO-A-01/69592
- DE-A1- 10 328 200
- US-A- 5 839 088
- US-A1- 2004 254 723

## Beschreibung

### Stand der Technik

Die Erfindung geht aus von einem Verfahren zur Auswahl eines Fahrziels oder einer Navigationsvorrichtung nach Gattung der unabhängigen Ansprüche.
Aus der DE 197 42 054 A1 ist bereits ein Eingabesystem wenigstens für Orts- und/oder Straßennamen bekannt, das eine Datenquellenanordnung bat, die außer einer ersten Orts-und/oder Straßenliste mit alphabetisch sortierten Orts- und/oder Straßennamen wenigstens eine zweite Orts- und/oder Straßenliste mit nach einem Häufigkeitskriterium sortierten Ort- und/oder Straßennamen aufweist. Von einem Spracheingabesystem einer Eingabeordnung werden Spracheingaben an eine Steueranordnung weitergeleitet. Als Häufigkeitskriterium kann nicht nur die Anzahl der Einwohner eines Ortes oder die Anzahl der in einer Straße wohnenden Einwohner, sondern auch eine aus Erfahrungswerten gebildete Suchhäufigkeit von Orten oder Straßen verwendet werden.

Aus der EP 1 376 063 A2 ist ein Verfahren zur Zieleingabe an einem Navigationsgerät und eine Navigationsdatenbasis bekannt. Für den Fall, dass in einer Navigationsdatenbasis mehrere Navigationsziele mit gleichem Ortsnamen vorhanden sind, werden zu den mehreren Navigationszielen jeweils eine Unterscheidung der Navigationsziele ermöglichende ergänzende Information ausgegeben. Hierbei wird jeweils eine Richtungs- und/oder Entfernungsangabe zu einem nächstgelegenen markanten Punkt, wie beispielsweise einer größeren Stadt, ausgeben.

### Offenbarung der Erfindung

### Vorteile der Erfindung

Das erfindungsgemäße Verfahren zur Auswahl eines Fahrziels mit den Merkmalen des Anspruchs 1 hat demgegenüber den Vorteil, dass eine Bestimmung eines Ortes als ein Fahrziel durch die Auswahl einer Umgehung um einen weiteren Ort herum vereinfacht wird. Gemäß dem angeführten Stand der Technik erfolgt zunächst eine Suche unter denjenigen Orten, deren Wahrscheinlichkeit besonders hoch ist. Ist der Ort in dieser Menge nicht enthalten, so muss ein Vergleich mit der gesamten Datenbasis durchgeführt werden. Gemäß dem erfindungsgemäßen Verfahren kann jedoch stattdessen durch eine zusätzliche Benutzereingabe die Suche auf eine bestimmte Zielumgebung eingeschränkt werden. Hierdurch kann die Menge der Ortsnamen, mit denen der eingegebene Ortsname verglichen wird, verringert werden, so dass nicht nur die Wahrscheinlichkeit einer richtigen Erkennung steigt, sondern auch die Zeit, die für eine Bestimmung des angegebenen Ortes benötigt wird, verringert wird. Die Auswahl einer Umgebung durch den Benutzer ist dabei ein für einen Benutzer leicht und intuitiv zu erfassendes Kriterium, mit dem wirksam die Menge der Ortsnamen, mit denen ein Vergleich durchgeführt werden soll, eingeschränkt werden kann. Durch den einfach durchzuführenden Vergleich kann ferner der Speicherbedarf und die Prozessorleistung reduziert werden, ohne dass für einen Benutzer Nachteile entstehen. Insbesondere können nachträgliche Abfragen bei ähnlichen oder gleichnamigen Orten gegebenenfalls vermieden werden, da andere gleichnamige Orte möglicherweise nicht in der ausgewählten Umgebung liegen.

Entsprechende Vorteile ergeben sich für eine Navigationsvorrichtung nach dem unabhängigen Anspruch 8, bei der eine Zieleingabe, insbesondere zur Durchführung einer Fahrtroutenberechnung, zu dem eingegebenen Fahrziel erfolgt. Durch die Verwendung in einem Fahrzeug kann mit der erfindungsgemäßen Navigationsvorrichtung die für die Eingabe des Fahrziels benötigte Zeit verringert und somit der Nutzerkomfort für den Fahrer des Fahrzeugs erhöht werden.

Hierbei ist erfindungsgemäß vorgesehen, den Vergleich eines angegebenen Ortsnamens auf eine Umgebung desjenigen Ortes zu beschränken, an dem die Eingabe durchgeführt wird. Befindet sich beispielsweise ein Fahrzeug mit einer Ortungsvorrichtung an einem bestimmten Ort in einem Straßennetz, so wird der Vergleich des eingegebenen Ortsnamens nur mit Orten in der Umgebung dieses Ortes durchgeführt.

Alternativ ist erfindungsgemäß vorgesehen den weiteren Ort für den Vergleich durch einen Benutzer einzugeben. Hierdurch kann der Benutzer, der im Allgemeinen weiß, in welcher Gegend sein Fahrziel liegt, die Menge der Ortsnamen einschränken, die mit dem eingegebenen Fahrziel verglichen werden. Somit ist auch eine Einschränkung unabhängig von einem aktuellen Ort der Durchführung der Eingabe möglich.

Durch die in den abhängigen Ansprüchen aufgeführten Maßnahmen sind vorteilhafte Weiterbildungen und Verbesserungen der in den unabhängigen Ansprüchen angegebenen Navigationsvorrichtung und des angegebenen Verfahrens zur Auswahl eines Fahrziels möglich.

Ferner ist es vorteilhaft, den Ortsnamen und/oder einen Namen des weiteren Ortes über eine Spracheingabe einzugeben. Besonders eine Spracheingabe ist hinsichtlich der Verarbeitung von eingegebenen Sprachsignalen aufwendig, so dass eine Vereinfachung des Vergleichs bei der Durchführung einer Spracheingabe besonders hohe Einsparungen bei der Rechenzeit und bei den erforderlichen Rechenressourcen bewirkt. Da bei der Spracheingabe mitunter Fehler durch ähnlich klingende oder gleich klingende Ortsnamen entstehen können, kann durch die Einschränkung auf die gewünschte Umgebung zudem eine Fehlerhäufigkeit verringert werden. Die Spracheingabe wird mit der erfindungsgemäßen Eingabe nicht nur schneller, sondern auch zuverlässiger.

Vorteilhaft ist es, die Umgebung des weiteren Ortes durch einen Umkreis mit einem vorgegebenen Radius zu beschreiben. Ein entsprechender Radius, der entweder fest vorgegeben, von dem weiteren Ort abhängig oder durch den Benutzer veränderbar ist, ist ein intuitives und für den Benutzer leicht erfassbares Kriterium, so dass der Benutzer die Folgen einer Einschränkung des Vergleichs auf die Umgebung gut abschätzen kann.

Ferner ist es vorteilhaft, den Radius in Abhängigkeit von der Bevölkerungsdichte zu wählen. Somit kann der Radius in dünn besiedelten Gebieten größer und in dicht besiedelten Gebieten kleiner gewählt werden. In dicht besiedelten Gebieten ist davon auszugehen, dass auch eine größere Anzahl von Orten vorhanden ist. Somit kann die Menge der Ortsnamen, die für den Vergleich verwendet werden, in dünn besiedelten und in dicht besiedelten Gebieten in etwa gleich gehalten werden.

Ferner ist es vorteilhaft, als weitere Umgebung ein Verwaltungsgebiet, beispielsweise einen Kreis, ein Stadtgebiet oder ein Bezirksgebiet zu definieren. Unabhängig von einem Radius kann dann ein Benutzer durch Kenntnis des jeweiligen Verwaltungsgebietes erfolgreich die Ortsnamensmenge für einen Vergleich einschränken.

Vorteilhaft erfolgen dabei zuerst die Eingabe des Ortsnamens und ein Vergleich mit einer ersten Menge von Ortsnamen. In dieser ersten Menge können besonders häufig angefahrene Ortsnamen, besonders große Städte oder aus anderem Grund besonders wahrscheinlich anzufahrende Orte abgelegt sein. Kleinere Orte, deren Auswahl nicht wahrscheinlich ist, sind dieser ersten Menge nicht zugeordnet. Für den Fall, dass der eingegebene Ort in der ersten Menge nicht auffindbar ist, kann durch die zusätzliche Bestimmung des weiteren Ortes der Vergleich auf die Umgebung des weiteren Ortes eingeschränkt werden, wobei in einer zweiten Menge, die der Umgebung des weiteren Ortes entspricht, Ortsnamen enthalten sind, die in der zuerst verwendeten Menge der Ortsnamen nicht enthalten sind. Gemäß einer Ausführungsform sind alle Ortsnamen, die in der Umgebung des weiteren Ortes auswählbar sind, in der zweiten Menge enthalten. Somit ist einerseits eine schnelle Auswahl eines besonders wahrscheinlichen Fahrziels möglich, während andererseits durch die Bestimmung des weiteren Ortes eine Detailauswahl, also gerade auch eine Auswahl kleinerer Orte, möglich ist, ohne die Menge der Ortsnamen zu vergrößern, die für den Vergleich herangezogen werden.

### Kurze Beschreibung der Zeichnungen

Ausführungsbeispiele der Erfindung sind in den Zeichnungen dargestellt und in der nachfolgenden Beschreibung näher erläutert. Es zeigen
Figur 1 eine erfindungsgemäße Navigationsvorrichtung,
Figur 2 eine Darstellung eines Gebiets mit Orten, denen jeweils Ortsnamen zugeordnet sind und aus denen in erfindungsgemäßer Weise ein Fahrziel bestimmt wird,
Figur 3 eine Ablauf eines Navigationsverfahrens zur Führung eines Fahrzeugs zu einem Fahrziel,
Figur 4 ein erfindungsgemäßes Verfahren zur Auswahl eines Fahrziels aus einer Menge gespeicherter Orte.

### Ausführungsformen der Erfindung

Das erfindungsgemäße Verfahren zur Auswahl eines Fahrziels kann für beliebige rechnergestützte Verfahren zur Auswahl eines Fahrziels verwendet werden. Insbesondere ist die Verwendung für ein Navigationssystem in einem Kraftfahrzeug vorteilhaft, bei dem ein Fahrer ein Fahrziel eingibt und eine Fahrtroute zu einem Ort bestimmt wird. Unter dem Ausdruck "Ort" bzw. "Ortsname" soll hierbei nicht nur die Bezeichnung einer Stadt oder eines Dorfes, sondern auch jede weitere Ortsbezeichnung verstanden werden. Insbesondere können hierunter auch die Bezeichnungen besonderer Objekte, wie z. B. Sehenswürdigkeiten, Behörden, Veranstaltungsorte oder Restaurants, aber auch Straßennamen, Flurbezeichnungen, Tankstellen oder Rastplätze verstanden werden. Die Vorteile der Erfindung ergeben sich jedoch bereits bei der Auswahl einer Stadt, eines Dorfes oder eines Stadtteils mittels des erfindungsgemäßen Verfahrens zur Auswahl eines Fahrziels. So ist es beispielsweise erforderlich, für die größeren europäischen Länder für die Eingabe eines Fahrziels eine Auswahl aus etwa 80 000 Städtenamen durchzuführen. Im Folgenden ist daher die vorliegende Erfindung am Beispiel einer Auswahl eines Städtenamens erläutert. Durch die Auswahl einer Zusammenfassung unterschiedlicher Kategorien von Ortsbezeichnungen, wie beispielsweise Straßennamen, besondere Objekte und Städte oder durch eine kategorieweise Auswahl von Ortsnamen, beispielsweise lediglich aus der Bezeichnung von besonderen Objekten, kann die Erfindung in entsprechender Weise auch über eine Auswahl eines Fahrziels für andere Arten von Ortsbezeichnungen angewendet werden.

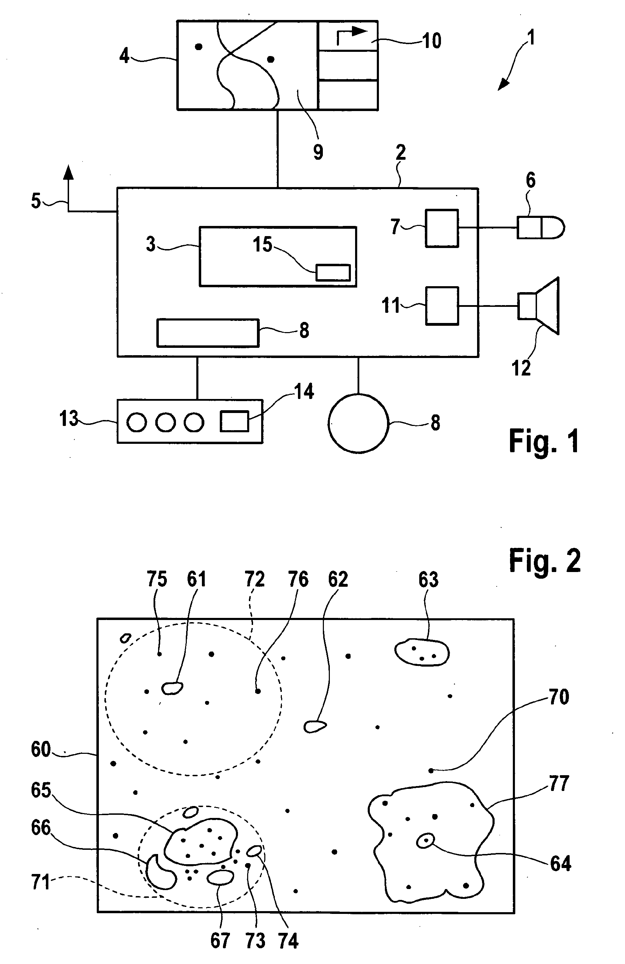

In der Figur 1 ist eine Navigationsvorrichtung 1 in einem Fahrzeug dargestellt. Die Navigationsvorrichtung 1 weist eine Zentraleinheit 2 auf, die über eine Recheneinheit 3 verfügt und an die eine Anzeigeeinheit 4 angeschlossen ist. Ferner ist die Zentraleinheit 2 mit einer Ortungseinheit 5 verbunden, die beispielsweise über eine Satellitenortung eine Position des Fahrzeugs in einem Straßennetz bestimmt. Ferner ist die Zentraleinheit 2 mit einem Mikrofon 6 verbunden, über das eine Spracheingabe durch einen Benutzer ermöglicht wird. Eine Sprachverarbeitungseinheit 7 verarbeitet die empfangenen Sprachsignale und leitet die verarbeiteten Signale an die Recheneinheit 3 weiter. Durch Zugriff auf eine Speichereinheit 8, beispielsweise auf ein CD-Laufwerk mit einem entsprechenden Datenträger, auf dem ein Kartengebiet mit Ortsnamen abgelegt ist, führt die Recheneinheit 3 eine Bestimmung des Fahrziels durch, wie es im Weiteren noch erläutert wird. Ein Programm zur Steuerung der Recheneinheit 3 ist bevorzugt in einem Speicher 8 der Zentraleinheit 2 abgelegt. Aus der über die Ortungseinheit 5 bestimmten aktuellen Position und dem eingegebenen Fahrziel bestimmt die Recheneinheit 3 eine Fahrtroute von der aktuellen Position zu dem eingegebenen Fahrziel. Diese Fahrtroute wird beispielsweise in einer Kartendarstellung 9 in der Anzeigeeinheit 4 dargestellt. Ferner können Abbiegehinweise optisch und/oder akustisch ausgegeben werden. Für eine optische Ausgabe kann beispielsweise eine Pfeildarstellung 10 in der Anzeige 4 erfolgen. Eine akustische Ausgabe erfolgt bevorzugt über eine Spracherzeugungseinheit 11, die entsprechende Abbiegehinweise in gesprochener Form an einen Lautsprecher 12 weiterleitet. Alternativ oder ergänzend zu der Spracheingabe über das Mikrofon 6 kann eine Steuerung der Navigationsvorrichtung 1 auch über eine Tastatur 13 erfolgen. Hierbei kann ein Ortsname über die Tastatur 13 in die Navigationsvorrichtung 1 eingegeben werden. Der über die Tastatur 13 eingegebene Ortsname oder der über das Mikrofon 6 eingegebene Ortsname werden in der Anzeigeeinheit 4 zur Kontrolle dargestellt, oder über die akustische Ausgabeeinheit 12 zur Kontrolle ausgegeben. Erfolgt dann eine Bestätigung entweder, beispielsweise über eine Bestätigungseingabe über das Mikrofon 6 oder über das Drücken einer Bestätigungstaste 14, so wird der eingegebene Ortsname als ein Fahrziel verwendet.

In dem Speicher 8 sind Ortsnamen jeweils mit einer Namensbezeichnung abgelegt, die mit einer geografischen Koordinate verknüpft ist, so dass den Ortsnamen jeweils eine Position in dem Straßennetz bzw. in dem Kartengebiet in dem Speicher 8 zugeordnet ist. Für die Kennzeichnung der Position eines Ortes können die geographischen Koordinaten des Längen- und des Breitengrades verwendet werden. Ferner ist es möglich, sogenannte WGS 84-Koordinaten für die Positionskennzeichnung zu verwenden. Die Recheneinheit 3 ist dabei bevorzugt so ausgelegt, dass ein Vergleich des eingegebenen Ortsnamens auch bei einer Abweichung von gespeicherten Ortsnamen, z. B. bei einem noch nicht vollständig eingegebenen Ortsnamen, bei einer falschen Schreibweise oder bei einer falschen Aussprache, die Identifikation eines ähnlichen Ortsnamens zulässt. In einer bevorzugten Ausführungsform sind zu den Ortsnamen auch phonetische Transkriptionen gespeichert, also entsprechende Lautschrift-Informationen zur Aussprache des Ortsnamens, die für die Identifikation mit eingegebenen Sprachsignalen verwendet werden. Ein Programm zur Steuerung des Vergleichs des eingegebenen Ortsnamens mit gespeicherten Ortsnamen ist beispielhaft ebenfalls in dem Speicher 8 abgelegt.

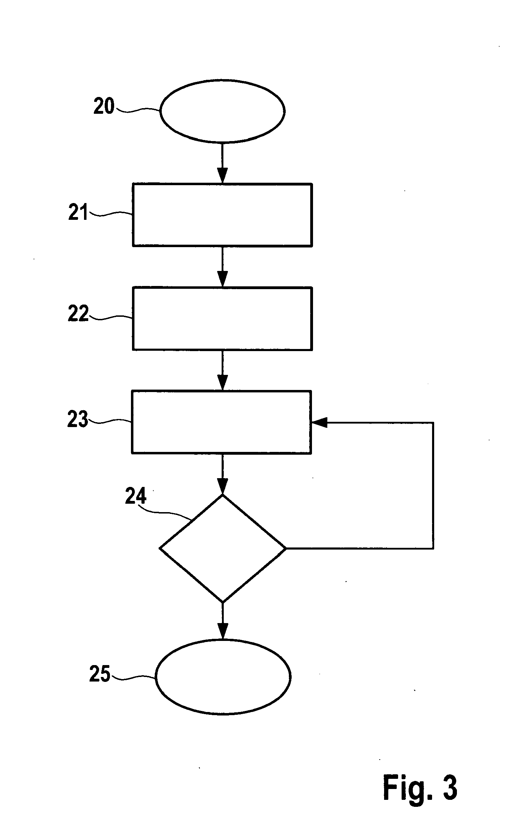

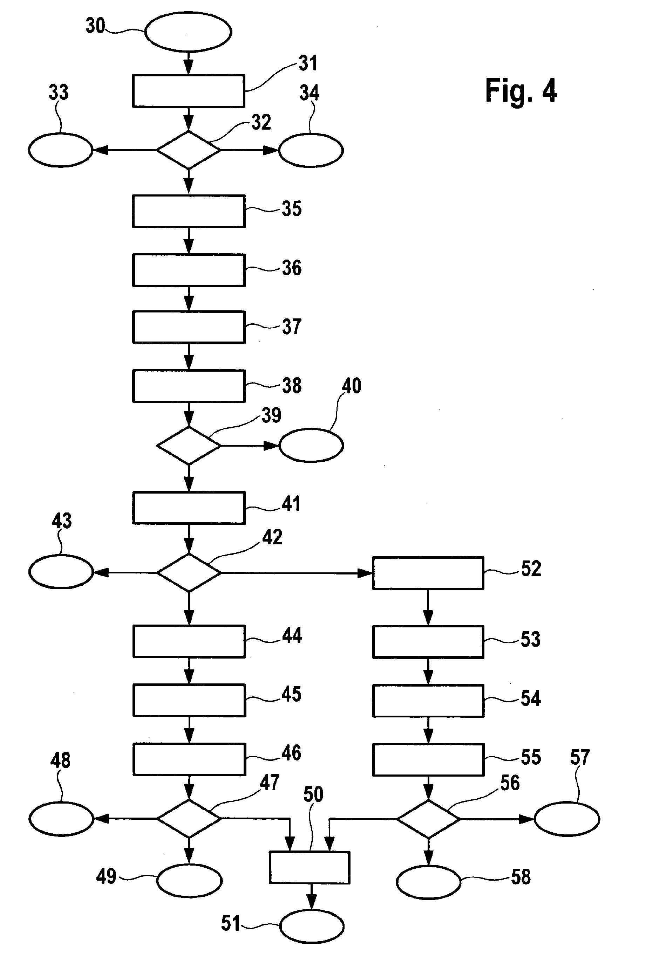

Ein erfindungsgemäßes Verfahren für die Durchführung einer Fahrzeugnavigation ist in der Figur 3 dargestellt. Ausgehend von einem Initialisierungsschritt 20 wird eine Routenführung gestartet, wobei die Navigationsvorrichtung 1 initialisiert wird und zur Eingabe eines Fahrziels auffordert. In einem nachfolgenden Eingabeschritt 21, der im Weiteren anhand der Figur 4 erläutert wird, erfolgt die Eingabe eines Fahrziels. In einem anschließenden Routenberechnungsschritt 22 wird eine Fahrtroute von der Position des Fahrzeugs zu dem eingegebenen Fahrziel berechnet. Anschließend werden in einem Ausgabeschritt 23 Fahranweisungen ausgegeben, die das Fahrzeug entlang der berechneten Fahrtroute führen. In einem anschließenden Prüfschritt 24 wird überprüft, ob das Fahrziel bereits erreicht wurde. Ist dies der Fall, so wird die Fahrzeugführung in einem Endschritt 25 beendet. Ist dies in dem Prüfschritt 24 nicht der Fall, so wird zu dem Ausgabeschritt 23 zur Ausgabe der nächsten Fahranweisung zurückverzweigt.

In der Figur 4 ist die Eingabe eines Fahrziels in die Navigationsvorrichtung 1 beschrieben. Ausgehend von einem Anfangsschritt 30 wird die Fahrzieleingabe initialisiert. Hierzu wird beispielsweise in der Anzeige 4 dargestellt "Bitte geben Sie ein Fahrziel ein" oder eine entsprechende Aufforderung wird über den Lautsprecher 12 ausgegeben. In einem anschließenden ersten Eingabeschritt 31 wählt ein Benutzer die Eingabeart des Fahrziels aus. In einem anschließenden Prüfschritt 32 wird überprüft, welche Eingabeart der Benutzer ausgewählt hat. Nur angedeutet, aber im Weiteren nicht erläutert, wird hier beispielsweise eine erste Eingabeart 33, bei der zunächst eine Kategorie von Fahrzielen ausgewählt wird, beispielsweise die Kategorie "Restaurants" oder "Museen". Gemäß einer zweiten Eingabeart 34 wird aus einer Liste von gespeicherten Fahrzielen, die ein Benutzer zuvor in einem Speicher abgelegt hat, ein Fahrziel ausgewählt. Weitere Auswahlarten von Fahrzielen sind denkbar. Wählt der Benutzer die Auswahl eines Stadtnamens aus, so wird von dem ersten Prüfschritt 32 zu einem Ladeschritt 35 weiterverzweigt. In einer anderen Ausführungsform können auch die Schritte 31 sowie 32 entfallen, und der Ladeschritt 35 kann sich unmittelbar an den Anfangsschritt 30 anschließen.

In dem Ladeschritt 35 bestimmt die Recheneinheit 3 eine Teilmenge von Ortsnamen; die für einen durchzuführenden Vergleich einer Eingabe mit den gespeicherten Ortsnamen in einen Arbeitsspeicher 15 der Recheneinheit 3 übertragen werden. In einem anschließenden Eingabeschritt 36 gibt ein Benutzer nun einen Ortsnamen ein. Die Eingabe erfolgt bevorzugt über das Mikrofon 6 und die Sprachverarbeitungseinheit 7. In einem anschließenden Vergleichsschritt 37 wird der eingegebene Ortsname mit den in dem flüchtigen Speicher 15 abgelegten Ortsnamen verglichen. In einer ersten Ausführungsform wird als Ergebnis des Vergleichs ein Ortsname ausgegeben, der die größte Ähnlichkeit mit dem eingegebenen Ortsnamen aufweist. In einer anderen Ausführungsform können auch mehrere Ortsnamen, insbesondere bei gleichlautenden oder sehr ähnlichen Ortsnamen, ausgegeben werden. Im vorliegenden Fall soll die Eingabe jedoch für die Übersichtlichkeit der Darstellung eindeutig sein.

In einem anschließenden Nachfrageschritt 39 wird der Benutzer gefragt, ob der eingegebene Ortsname als Fahrziel ausgewählt werden soll. Wird dies vom Benutzer bestätigt, so wird der dem ausgewählten Ortsnamen zugeordnete Ort, also insbesondere seine geographische Position im Straßennetz, in einem Festsetzungsschritt 40 als Fahrziel ausgewählt und das Navigationsverfahren wird mit dem Routenberechnungsschritt 22 gemäß der Figur 3 fortgeführt. Gibt der Benutzer jedoch an, dass der ausgegebene Ortsname nicht das Fahrziel ist, so wird zu einem Auswahlschritt 41 weiterverzweigt, in dem der Benutzer ein Verfahren zur Konkretisierung seines Fahrziels auswählt.

In einem anschließenden Prüfschritt 42 wird überprüft, welches Verfahren zur Konkretisierung ein Benutzer ausgewählt hat. In einer ersten Ausführungsform wählt ein Benutzer eine Suche in einer Umgebung um die aktuelle Fahrzeugposition aus. In einer zweiten Alternative wählt ein Benutzer eine Suche in einer Umgebung um einen weiteren, von ihm noch einzugebenden Ort aus. In weiteren Alternativen kann ein Benutzer auch hier eine Kategorieauswahl, beispielsweise nach Restaurants oder Museen oder eine andere Auswahl aussuchen. Eine solche Auswahl ist durch den nicht näher erläuterten Verfahrensschritt 43 angedeutet.

Gemäß der ersten Alternative, also der Auswahl um die aktuelle Fahrzeugposition, wird zu einem Ladeschritt 44 weiterverzweigt. In dem Ladeschritt 44 lädt die Recheneinheit 3 eine Menge von Ortsnamen in einer Umgebung der aktuellen Fahrzeugposition, beispielsweise mit einem Radius von 15 km um die aktuelle Fahrzeugposition, aus dem Speicher 8 in den flüchtigen Speicher 15. Die geladenen Ortsnamen ersetzen die dort zuvor gespeicherten Ortsnamen gemäß dem Ladeschritt 35. In einem anschließenden Eingabeschritt 45 wird ein Vergleich des zuvor eingegebenen Ortsnamens nunmehr mit den in den flüchtigen Speicher 15 übertragenen Ortsnamen durchgeführt und einer der Ortsnamen wird ermittelt und in dem nachfolgenden Ausgabeschritt 46 über die Anzeige 4 und/oder über den Lautsprecher 12 ausgegeben. In einem nachfolgenden Prüfschritt 47 wird der Benutzer gefragt, ob der dargestellte Ortsname als Fahrziel ausgewählt werden soll. Wird dies bejaht oder erfolgt innerhalb einer vorgegebenen Zeit keine Eingabe, so wird der dargestellte Ortsname gemäß einem Verfahrensschritt 48 als der gewünschte Ortsname ausgewählt und das Navigationsverfahren gemäß der Figur 3 wird mit dem Routenberechnungsschritt 22 fortgeführt. Ist der dargestellte Ortsname nicht der gewünschte Ortsname, so wird das Verfahren in einem Endschritt 49 abgebrochen und der Benutzer muss die Ortsnamenseingabe wiederholen. Möglicherweise wurde seine Spracheingabe nicht eindeutig verstanden. Bei einer Tastatureingabe liegt möglicherweise ein Schreibfehler vor. In einer alternativen Ausführungsform ist es bei einer Realisierung als eine Spracheingabe möglich, nun von einer Eingabe als ein Ganzwort zu einer Eingabe des Ortsnamens durch Aussprache der einzelnen Buchstaben des Ortsnamens zu wechseln, so dass der Ortsname buchstabiert wird.

Für den Fall, dass der Ortsname in der Umgebung mehrfach vorkommt, so wird zu einem Entscheidungsschritt 50 verzweigt, in dem der Benutzer aufgefordert wird, einen der Ortsnamen auszuwählen. Nach erfolgter Auswahl wird der ausgewählte Ortsname entsprechend dem Schritt 48 in einem Festsetzungsschritt 51 als der gewünschte Ortsname ausgewählt.

Gemäß der zweiten Alternative wird von dem Prüfschritt 42 zu einem Eingabeschritt 52 verzweigt, in dem der Benutzer den weiteren Ort angibt. Anschließend wird in einem Ladeschritt 53 eine Umgebung zu dem weiteren Ort bestimmt, so dass die Ortsnamen aus dem Speicher 8 in den flüchtigen Speicher 15 geladen werden. Dies sind beispielsweise alle Orte, die in dem Landkreis des ausgewählten weiteren Ortes liegen. Ferner können diese Orte auch in einer durch einen Radius um diesen Ort bestimmten Umgebung liegen. Anschließend erfolgt entsprechend dem Schritt 45 ein Vergleich des zuvor eingegebenen Ortsnamens mit den nunmehr in den flüchtigen Speicher 15 geladenen Ortsnamen in einem Vergleichsschritt 54. Entsprechend dem Schritt 46 erfolgt anschließend in einem Ausgabeschritt 55 eine Darstellung des Ortsnamens in der Anzeige 4 und/oder eine akustische Ausgabe des gewählten Ortsnamens über den Lautsprecher 12. In einem anschließenden Prüfschritt 56 wird der Benutzer gefragt, ob er mit dem ausgewählten Ortsnamen einverstanden ist. Ist dies der Fall, so wird entsprechend in dem Schritt 48 zu einem Festlegungsschritt 57 verzweigt, in dem der ausgewählte Ortsname als Fahrziel festgelegt wird, so dass das Navigationsverfahren mit dem Routenberechnungsschritt 22 fortgeführt werden kann. Entsprechend dem Schritt 49 wird für den Fall, dass der eingegebene Ortsname unzutreffend ist, das Verfahren in einem Endschritt 58 beendet, oder der Nutzer kann alternativ bei einer Spracheingabe den Ortsnamen über Buchstabieren eingeben. Für den Fall, dass der Ortsname in der Umgebung des weiteren Ortes mehrfach vorkommt, wird zu dem Entscheidungsschritt 50 verzweigt.

Das erfindungsgemäße Verfahren wird nochmals anhand einer Kartendarstellung in der Figur 2 erläutert. In der Figur 2 sind verschieden große Ortschaften dargestellt, wobei kleinere Orte punktförmig und größere Orte mit einer Umrandung dargestellt sind. Das Kartengebiet 60 soll dabei die Gesamtmenge des Kartengebietes in dem Speicher 8 darstellen. In der Praxis wird das Kartengebiet 60 bevorzugt durch die Gesamtfläche eines oder mehrerer Staaten gebildet. Entsprechend dem ersten Ladeschritt 35 werden zunächst für den Vergleich nur die Ortsnamen von größeren Orten, also gemäß der Figur 2 die Ortsnamen der Orte 61, 62, 63, 64, 65, 66 und 67 geladen. Die übrigen, kleineren Orte, insbesondere die punktförmig dargestellten Orte, beispielsweise den Ort 70, werden in dem ersten Ladeschritt 35 nicht geladen. Insbesondere werden sie in dem nachfolgenden Vergleichsschritt 37 nicht für einen Vergleich herangezogen. Befindet sich nun das Fahrzeug in der Stadt 65 und wählt der Benutzer eine Suche in der Umgebung des Fahrzeugs, so wird die gestrichelt gezeigte Umgebung 71 als Umgebung des weiteren Ortes, nämlich als eine Umgebung der Stadt 65 festgelegt. Gleiches gilt auch für den Fall, dass sich das Fahrzeug beispielsweise in dem Ort 70 aufhält und der Fahrer eine Suche um den weiteren Ort 65 herum auswählt. Wählt der Fahrer eine Suche um den Ort 61 herum aus, so wird eine größere Umgebung 72 gewählt, da die Bevölkerungsdichte in dem Gebiet der Stadt 65 größer ist, als in dem Gebiet um die Stadt 61.

Wählt nun ein Benutzer die Umgebung der Stadt 65 aus, so werden nach der Auswahl die Orte 61, 62, 63 und 64 nicht mehr für einen Vergleich herangezogen, dafür aber alle Orte in der Umgebung 71, so beispielsweise auch die Orte 73 und 74. Die Orte 66 und 67 sind so groß, dass sie auch bereits in der ersten Auswahl enthalten waren. Da sie auch in der Umgebung des Ortes 65 liegen, stehen sie auch für den weiteren Vergleich zur Verfügung.

Der Radius einer Umgebung kann automatisch in Abhängigkeit von der Bevölkerungsdichte festgelegt werden. Ferner ist es auch möglich, dass ein Benutzer, beispielsweise über die Tastatur 13, einen Radius auswählt. Der Radius kann damit nach Benutzerwunsch beispielsweise zwischen 5 km und 100 km schwanken. Ein größerer Radius ist insbesondere dann vorteilhaft, wenn zu der Auswahl der Umgebung noch ein weiteres Kriterium tritt, beispielsweise ein zusätzliches Kategorie-Kriterium wie "Hotel", "Museum" oder "Restaurant".

Befinden sich in dem Kartengebiet mehrere gleichnamige Orte, kann durch ein Festlegen einer Umgebung entsprechend eine Auswahl vorgenommen werden. Für den Fall, dass beispielsweise die Orte 74, 75, 76 und 63 gleichnamig wären, würde in dem Ausgabeschritt 38 bei korrekter Erkennung des Ortsnamens nur der Ortsname des Ortes 63 ausgegeben. Würde nun ein Benutzer die Umgebung der Stadt 65 wählen, so würde nur der Ortsname 74 ausgegeben. Würde dagegen ein Benutzer die Umgebung des Ortes 61 wählen, so würden die Ortsnamen der Orte 75 und 76 ausgegeben. Diese Orte werden in der Ausgabe beispielsweise durch ein zusätzliches Kriterium gekennzeichnet, beispielsweise durch die Zugehörigkeit zu einem Verwaltungsgebiet.

Ferner ist es auch möglich, dass eine Umgebung durch ein Verwaltungsgebiet, beispielsweise eine Kreisgrenze, gekennzeichnet wird. Ein solches Verwaltungsgebiet kann beispielsweise ein Landkreis sein, angedeutet durch das Gebiet 77 mit der Stadt 64 als eine Kreisstadt.

Anstelle eines Ladevorgangs der gesamten Ortsnamen von dem Speicher 8 in den flüchtigen Speicher 15 kann es auch möglich sein, die Suche in dem Speicher 8 unmittelbar durchzuführen. In einer anderen Ausführungsform ist es auch möglich, dass zunächst die Eingabe eines Ortsnamens erfolgt und für die Übertragung von Daten von dem Speicher 8 die Eingabe als zusätzliches Kriterium herangezogen wird. So wäre es beispielsweise möglich, einen ersten Laut, eine erste Silbe oder einen ersten Buchstaben des Ortsnamens zu bestimmen und dieses Kriterium für die Übertragung von Daten von dem Speicher 8 in den flüchtigen Speicher 15 zusätzlich heranzuziehen.

Im Folgenden wird die Erfindung nochmals anhand konkreter Beispiele für die Auswahl eines Fahrziels erläutert. Hierbei ist die Eingabe am Beispiel einer Spracheingabe durch den Benutzer erläutert. Gemäß einem ersten Szenario erfolgt eine Einleitung einer Fahrzieleingabc durch die Eingabe des Befehls "Zieleingabe". Die Navigationsvorrichtung fragt daraufhin über eine Sprachausgabe und/oder über die Anzeige 4:"Was wollen Sie eingeben?". Der Nutzer antwortet daraufhin "Stadt eingeben". Nun wird bevorzugt die Liste der größeren Städte geladen, wie sie anhand der Figur 2 erläutert wurde. Der Benutzer wird nun aufgefordert, den gewünschten Zielort einzugeben. Der Nutzer antwortet hierauf mit "Hildesheim". Die gesprochene Audioinformatiun dieser Nutzereingabe wird gespeichert und mit der Ortsnamensliste verglichen. Da Hildesheim eine große Stadt ist, wurde diese mit einer Liste größerer deutscher Städte bereits geladen. Die Navigationsvorrichtung fragt daraufhin: "Sagten Sie Hildesheim?". Dies wird vom Benutzer bejaht, so dass die Zielführung in das Stadtzentrum Hildesheim starten kann.

In einem anderen Beispiel antwortet der Benutzer auf die Frage nach dem gewünschten Zielort mit "Petze". Die Stadt Petze ist jedoch zu klein, so dass die Sprachverarbeitungseinheit 7 die Stadt Peine erkennt. Entsprechend fragt das System: "Sagten Sie Peine?". Der Benutzer antwortet hierauf mit: "Nein, suche in der Umgebung". Entsprechend wird nun von dem Prüfschritt 42 die erste Alternative gewählt und eine Suche in der Umgebung der aktuellen Position durchgeführt. Für den Fall, dass sich das Fahrzeug in der Nähe der Stadt Petze befindet, wird unter anderem dieser Ortsname für den Vergleich berücksichtigt. Infolgedessen wird dem Benutzer ausgegeben:" Sagten Sie Petze?". Dies wird vom Benutzer mit:" Ja, Zielführung starten", beantwortet, so dass das Stadtzentrum des Orts Petze als Fahrziel berücksichtigt wird. Für den Fall, dass sich das Fahrzeug nicht in der Nähe von Petze befindet, antwortet der Fahrer auf die Rückfrage: "Sagten Sie Peine?", gemäß dem gerade gezeigten Ausführungsbeispiel mit: "Nein, suche um eine größere Stadt". Nunmehr wird die Eingabe auf eine Liste mit größeren Städten zur Eingabe des weiteren Ortes reduziert. Alternativ kann als weiterer Ort nunmehr auch eine Sehenswürdigkeit ausgesucht werden, beispielsweise durch den Befehl: "Nein, suche um eine Sehenswürdigkeit".

Auf die Frage nach der Suche um eine größere Stadt antwortet der Fahrer mit: "Hildesheim". Dies wird von der Navigationsvorrichtung bevorzugt durch eine zusätzliche Abfrage überprüft. Im vorliegenden Fall heißt diese Abfrage: "Sie wollen um Hildesheim suche?". Der Nutzer antwortet mit: "Ja". In einer weiteren Ausführungsform kann die Eingabe auch derart erfolgen, dass der Benutzer statt der Eingabe "Nein, suche um eine größere Stadt" die Eingabe "Nein, suche um Hildesheim" vornimmt.

Im Anschluss lädt die Navigationsvorrichtung erneut eine Liste von Städten in der Umgebung von Hildesheim. Nunmehr wird der Vergleich dieser Städte mit der zuvor bereits vorgenommenen Ortseingabe "Petze" durchgeführt. Da Petze nahe bei Hildesheim liegt, wird der Vergleich positiv durchgeführt, so dass der Ortsname aufgefunden wird. Es erfolgt die Ausgabe: "Sagten Sie Petze?". Der Nutzer antwortet hierauf mit: "Ja, Zielführung starten".

In einer weiteren Ausführungsform ist es auch möglich, dass zunächst der weitere Ort eingegeben wird, die Eingabe eines Ortsnamens des Fahrziels erst im Anschluss durchgeführt wird und sich hieran der Vergleich mit den Ortsnamen in der Umgebung des weiteren Ortes anschließt. Gemäß dieser Ausführungsform gibt ein Fahrer zunächst ein "Suche um Hildesheim". Auf die Frage "Welcher Ort soll in der Umgebung von Hildesheim gesucht werden?" antwortet der Fahrer dann mit "Petze". Es schließt sich nun ein Vergleich der Eingabe "Petze" mit Orten in der Umgebung von Hildeheim an, so dass der Ort Petze aufgefunden und als ein Fahrziel ausgewählt wird. In entsprechender Weise kann der Fahrer auch durch eine Eingabe "Suche in der Umgebung" einen Vergleich einer nachfolgenden Eingabe auf eine Umgebung um die aktuelle Fahrzeugposition eingrenzen.

Häufig sind Ortsnamen in einem größeren Land mehrfach vorhanden. So existiert beispielsweise der Ort "Neuhof" ca. 90-mal in Deutschland. Um eine unnötige Nutzerabfrage zur Auflösung von eventuellen Mehrdeutigkeiten zu vermeiden, kann zusätzlich die Eingabe des weiteren Ortes verwendet werden, um den von einem Nutzer gesuchten Ortsnamen als ein gewünschtes Fahrziel herauszufiltern. Sollten sich im Suchkreis mehrere Orte mit dem gleichen Namen befinden, so müssen dem Benutzer nur die tatsächlich relevanten Ortsnamen zur Auflösung von Mehrdeutigkeiten angeboten werden. Antwortet der Nutzer beispielsweise auf die Frage nach dem gewünschten Zielort mit: "Neuhof", so wird er zunächst gefragt:" Sagten Sie Neustadt?", da keine der Orte "Neuhof" groß genug für eine Aufnahme in die Liste der größeren Städte von beispielsweise mit mehr als 50.000 Einwohnern ist. Antwortet der Benutzer hierauf mit:" Nein, suche in der Umgebung", so wird eine Umgebungsliste von Städten um die aktuelle Position geladen. Für den Fall, dass in der Umgebung mehrere Orte mit dem gleichen Namen liegen, wird eine zusätzliche Information mit erfasst. So erfolgt beispielsweise für den Fall, dass sich das Fahrzeug zwischen den Orten Neuhof, Hannover und Neuhof, Hildesheim befindet und beide Orte in der Umgebung der aktuellen Position liegen, die Rückfrage:" Sagten Sie Neuhof? Dieser Ort ist mehrfach vorhanden. Bitte wählen Sie aus: Neuhof, Hildesheim oder Neuhof, Hannover". Der Benutzer kann nun durch die Eingabe "Neuhof, Hildesheim" diesen Ort auswählen.

## Patentansprüche

1. Verfahren zur Auswahl eines Fahrziels aus einer Menge gespeicherter Orte, wobei ein Ortsname zum Vergleich des eingegebenen Ortsnamens mit gespeicherten Ortsnamen eingegeben wird, wobei aus dem Vergleich des eingegebenen Ortsnamens wenigstens einer der gespeicherten Orte als ein mögliches Fahrziel bestimmt wird, wobei ein weiterer Ort bestimmt wird, **dadurch gekennzeichnet, dass** der weitere Ort durch einen Benutzer bestimmt wird oder dass als weiterer Ort der Ort ermittelt wird, an dem die Eingabe des Ortsnamens durchgeführt wird, dass eine Umgebung des weiteren Ortes bestimmt wird und dass ein aus dem Vergleich als mögliches Fahrziel bestimmter Ort nur dann zur Auswahl als ein Fahrziel ausgegeben wird, wenn der Ort in der bestimmten Umgebung des weiteren Ortes liegt.

2. Verfahren nach einem der vorhergehenden Ansprüche, **dadurch gekennzeichnet, dass** der Ortsname und/oder ein Name des weiteren Ortes über eine Spracheingabe eingegeben wird.

3. Verfahren nach einem der vorhergehenden Ansprüche, **dadurch gekennzeichnet, dass** die Umgebung des weiteren Ortes durch einen Umkreis mit einem vorgegebenen Radius um den weiteren Ort beschrieben ist.

4. Verfahren nach Anspruch 3, **dadurch gekennzeichnet, dass** ein Radius des Umkreises von der Bevölkerungsdichte in der Umgebung um den weiteren Ort herum abhängt.

5. Verfahren nach einem der Ansprüche 1-2, **dadurch gekennzeichnet, dass** die Umgebung durch die Grenzen eines Verwaltungsgebiets beschrieben wird, in dem der weitere Ort liegt.

6. Verfahren nach einem der vorhergehenden Ansprüche, **dadurch gekennzeichnet, dass** der eingegebene Ortsname zunächst vor einer Berücksichtigung des weiteren Ortes mit einer ersten Menge der gespeicherten Ortsnamen verglichen wird und nach Bestimmung der Umgebung des weiteren Ortes mit einer zweiten Menge der gespeicherten Ortsnamen verglichen wird, die sich von der ersten Menge unterscheidet.

7. Verfahren nach Anspruch 6, **dadurch gekennzeichnet, dass** in der zweiten Menge Ortsnamen enthalten sind, die in der ersten Menge nicht enthalten sind.

8. Navigationsvorrichtung in einem Fahrzeug mit einer Eingabeeinheit (6, 13) zur Eingabe von Ortsnamen,
mit einer Speichereinheit (8, 15) zur Speicherung von Ortsnamen,
mit einer Recheneinheit (3) zur Durchführung eines Vergleichs eines eingegebenen Ortsnamens mit in der Speichereinheit (8, 15) gespeicherten Ortsnamen, wobei die Recheneinheit zur Bestimmung einer Umgebung eines weiteren Ortes aus einer Eingabe eines weiteren Ortes durch einen Benutzer oder aus einer ermittelten Position des Fahrzeugs bei der Eingabe des Ortsnamens sowie zur Einschränkung des Vergleichs auf einen Vergleich des eingegebenen Ortsnamens mit Ortsnamen von Orten in der Umgebung des weiteren Ortes ausgelegt ist,
und mit einer Ausgabeeinheit (4, 12) zur Ausgabe wenigstens eines sich aus dem Vergleich ergebenden Ortes als ein vorgeschlagenes Fahrziel.

9. Navigationsvorrichtung nach Anspruch 8, **dadurch gekennzeichnet, dass** die Eingabeeinrichtung eine Spracheingabeeinheit (6, 7) umfasst.

## Claims

1. Method for selecting a travel destination from a set of stored places, wherein a place name is input for the purpose of comparison of the input place name with stored place names, wherein the comparison of the input place name is used to determine at least one of the stored places as a possible travel destination, wherein a further place is determined, **characterized in that** the further place is determined by a user or **in that** the further place ascertained is the place at which the place name is input, **in that** surroundings of the further place are determined and **in that** a place determined from the comparison as a possible travel destination is output for selection as a travel destination only if the place is located in the determined surroundings of the further place.

2. Method according to the preceding claim, **characterized in that** the place name and/or a name for the further place is input by means of voice input.

3. Method according to one of the preceding claims, **characterized in that** the surroundings of the further place are described by a perimeter with a prescribed radius around the further place.

4. Method according to Claim 3, **characterized in that** a radius of the perimeter is dependent on the density of population in the surroundings around the further place.

5. Method according to one of Claims 1-2, **characterized in that** the surroundings are described by the boundaries of an administrative area in which the further place is located.

6. Method according to one of the preceding claims, **characterized in that** the input place name is first of all compared with a first set of stored place names before the further place is taken into account, and, when the surroundings of the further place have been determined, is compared with a second set of stored place names, which is different from the first set.

7. Method according to Claim 6, **characterized in that** the second set contains place names which are not contained in the first set.

8. Navigation apparatus in a vehicle having an input unit (6, 13) for inputting place names,
having a memory unit (8, 15) for storing place names,
having a computation unit (3) for performing a comparison between an input place name and place names stored in the memory unit (8, 15), wherein the computation unit is designed to determine surroundings of a further place from an input of a further place by a user or from an ascertained position of the vehicle when the place name is input and to restrict the comparison to a comparison of the input place name with place names of places in the surroundings of the further place,
and having an output unit (4, 12) for outputting at least one place resulting from the comparison as a proposed travel destination.

9. Navigation apparatus as claimed in Claim 8, **characterized in that** the input device comprises a voice input unit (6, 7).

## Revendications

1. Procédé de sélection d'une destination dans un ensemble de lieux conservés en mémoire, dans lequel
le nom d'un lieu est introduit pour comparer le nom de lieu introduit à des noms de lieux conservés en mémoire,
à partir de la comparaison avec le nom de lieu introduit, au moins un des lieux conservés en mémoire est défini comme constituant une destination possible,
un autre lieu étant défini,
**caractérisé en ce que**
l'autre lieu est déterminé par l'utilisateur ou
**en ce que** le lieu auquel l'introduction du nom de lieu a été exécutée est déterminé comme autre lieu,
**en ce que** l'environnement de l'autre lieu est déterminé et
**en ce qu'**à partir de la comparaison, un lieu défini comme destination possible n'est délivré pour être sélectionné comme destination que si le lieu est situé dans l'environnement défini de l'autre lieu.

2. Procédé selon l'une des revendications précédentes, **caractérisé en ce que** le nom du lieu et/ou le nom de l'autre lieu sont introduits vocalement.

3. Procédé selon l'une des revendications précédentes, **caractérisé en ce que** l'environnement de l'autre lieu est décrit par un cercle de rayon prédéterminé centré sur l'autre lieu.

4. Procédé selon la revendication 3, **caractérisé en ce que** le rayon du cercle dépend de la densité de population de l'environnement qui entoure l'autre lieu.

5. Procédé selon l'une des revendications 1 et 2, **caractérisé en ce que** l'environnement est décrit par les limites d'une zone administrative dans laquelle l'autre lieu est situé.

6. Procédé selon l'une des revendications précédentes, **caractérisé en ce que** le nom de lieu introduit est d'abord comparé avec un premier ensemble de noms de lieux conservés en mémoire avant de tenir compte de l'autre lieu et, après détermination de l'environnement de l'autre lieu, est comparé à un autre ensemble de noms de lieux conservés en mémoire, différent du premier ensemble.

7. Procédé selon la revendication 6, **caractérisé en ce que** le deuxième ensemble contient des noms de lieux que ne contient pas le premier ensemble.

8. Dispositif de navigation prévu dans un véhicule et doté
d'une unité d'introduction (6, 13) qui permet d'introduire des noms de lieux,
d'une unité de mémoire (8, 15) qui conserve des noms de lieux,
d'une unité de calcul (3) qui exécute une comparaison entre un nom de lieu introduit et des noms de lieux conservés en mémoire dans l'unité de mémoire (8, 15),
l'unité de calcul étant conçue pour déterminer un environnement d'un autre lieu à partir de l'introduction d'un autre lieu par l'utilisateur ou de la position du véhicule qui a été déterminée lors de l'introduction du nom de lieu, et pour limiter la comparaison à une comparaison entre le nom de lieu introduit et des noms de lieux situés dans l'environnement de l'autre lieu, et
une unité de sortie (4, 12) qui délivre comme proposition de destination au moins un lieu qui ressort de la comparaison.

9. Dispositif de navigation selon la revendication 8, **caractérisé en ce que** le dispositif d'introduction comprend une unité (6, 7) d'introduction vocale.
